Europäisches Patentamt

European Patent Office

Office européen des brevets

(19)

(11) Numéro de publication : **0 076 751
B1**

# FASCICULE DE BREVET EUROPÉEN

(12)

(45) Date de publication du fascicule du brevet :
**28.05.86**

(51) Int. Cl.⁴ : **B 60 T   8/28**

(21) Numéro de dépôt : **82401785.9**

(22) Date de dépôt : **30.09.82**

(54) **Correcteur de freinage asservi à la décélération.**

(30) Priorité : **06.10.81 FR 8118793**

(43) Date de publication de la demande :
**13.04.83 Bulletin 83/15**

(45) Mention de la délivrance du brevet :
**28.05.86 Bulletin 86/22**

(84) Etats contractants désignés :
**DE GB IT SE**

(56) Documents cités :
**EP-A- 0 019 509
FR-A- 2 302 219
FR-A- 2 437 962**

(73) Titulaire : **BENDIX France
126, rue de Stalingrad
F-93700 Drancy (FR)**

(72) Inventeur : **Carré, Jean-Jacques
59 Bld de l'Est
F-93340 Le Raincy (FR)**
Inventeur : **Riquart, Christian
33 rue Fessart
F-75019 Paris (FR)**

(74) Mandataire : **Poidatz, Emmanuel et al
Service Brevets Bendix 44 rue François 1er
F-75008 Paris (FR)**

Jouve, 18, rue St-Denis, 75001 Paris, France

## Description

L'invention se rapporte aux correcteurs de freinage asservis à la décélération.

On connaît du document EP-A-0 061 960 (publié le 06-10-1982, document selon Article 54 (3) CBE) un correcteur de freinage asservi à la décélération qui comporte entre le piston de correcteur et la masse un ressort qui rappelle la masse dans le sens de l'ouverture du correcteur.

On connaît de FR-A-2 437 962, un correcteur de freinage à monter sur le conduit de liaison entre le maître-cylindre et les freins de roue arrière d'une installation de freinage pour véhicule. Ce correcteur de freinage asservi à la décélération comprend un boîtier percé d'un alésage dans lequel débouchent un orifice d'entrée à relier à une source de pression et un orifice de sortie à relier à un moteur de frein, un piston de correcteur monté coulissant dans ledit alésage et soumis aux pressions régnant auxdits orifices ainsi qu'à une force de rappel élastique le rappelant vers une position de repos, une valve de correcteur située entre lesdits orifices et commandé par ledit piston de correcteur, un piston pilote monté coulissant dans ledit alésage soumis sur l'une de ses faces à la pression régnant audit orifice de sortie et délimitant par son autre face une chambre pilote, ledit piston pilote commandant également ladite valve de correcteur, un clapet monté dans un conduit entre ledit orifice d'entrée et ladite chambre pilote et un dispositif décélérométrique commandant ledit clapet, ledit piston pilote étant arrangé entre le dispositif décélérométrique et le piston de correcteur.

On constate que, sous certaines conditions, ce clapet demeurait en position de fermeture même après relâchement complet de la pression de freinage, ce qui neutralise l'asservissement du correcteur à la décélération lors des applications de freinage ultérieures.

Dans le but de pallier cet inconvénient, l'invention propose un correcteur du type spécifié ci-avant, caractérisé en ce qu'il comprend un dispositif, rigide au moins en direction de l'axe de l'alésage, entre ledit piston pilote et ledit clapet, ledit dispositif rigide maintenant ledit clapet en position ouverte lorsque ledit piston de correcteur occupe sa position de repos.

L'invention sera maintenant décrite en se référant aux dessins annexés, dans lesquels :

la figure 1 est une vue en coupe longitudinale d'un premier mode de réalisation d'un correcteur de freinage selon l'invention ; et

la figure 2 est une vue en coupe longitudinale d'un second mode de réalisation d'un correcteur de freinage selon l'invention.

Pour des raisons de commodité, les éléments qui se retrouvent de manière pratiquement identique dans les deux modes de réalisation seront désignés par les mêmes numéros de référence, augmentés de la valeur 100 dans le cas de la seconde figure.

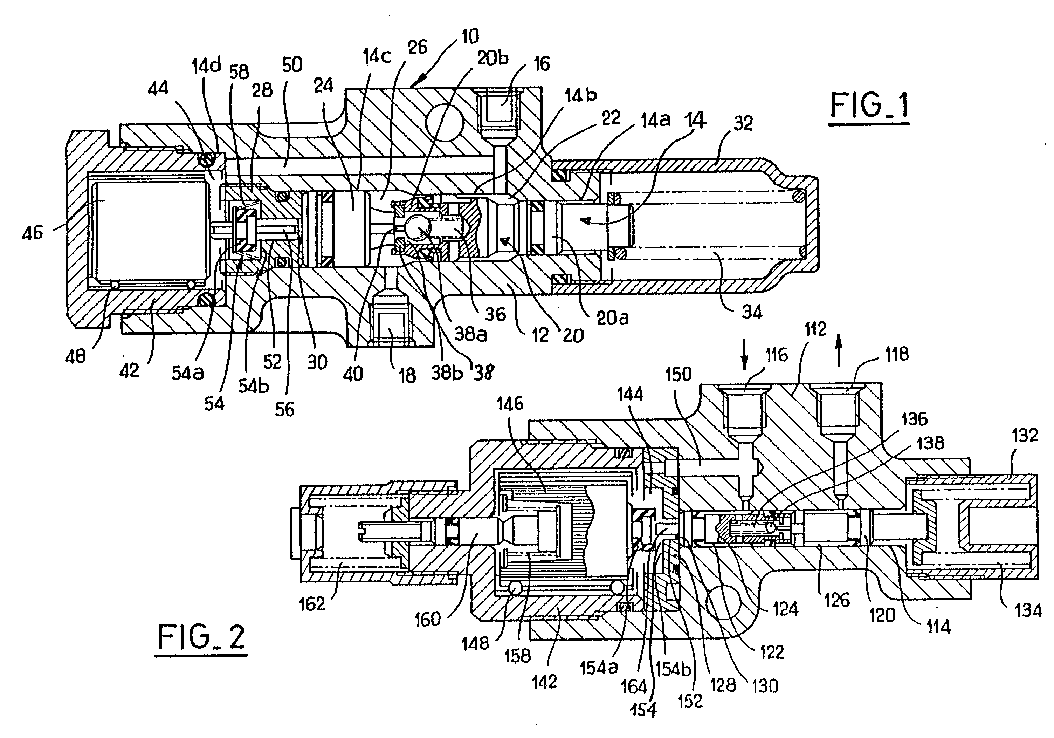

Ainsi, à la figure 1, le correcteur 10 comprend un boîtier 12 percé d'un alésage étagé 14 formé de plusieurs parties successives 14a, 14b, 14c et 14d dont les diamètres sont progressivement croissants.

Un orifice d'entrée 16 débouche dans la partie d'alésage 14b et un orifice de sortie 18 débouche dans la partie d'alésage 14c. Un piston étagé 20 est monté coulissant dans l'alésage 14. Une première portée 20a coulissant dans la partie d'alésage 14a et une seconde portée 20b coulissant dans la partie d'alésage 14b entre les orifices d'entrée et de sortie.

Entre les deux parties du piston et la partie d'alésage 14b se trouve ainsi définie une chambre d'entrée 22 dans laquelle débouche l'orifice d'entrée 16.

Dans la partie d'alésage 14c est monté coulissant un piston pilote 24, l'espace compris entre ce dernier et la partie de piston 20b constituant une chambre de sortie 26 dans laquelle débouche l'orifice de sortie 18.

Une douille de butée 28 est montée fixe dans la partie d'alésage 14c à l'opposé du piston pilote 24, une chambre pilote 30 se trouvant ainsi définie entre la douille 28 et le piston pilote 24.

Une chemise tubulaire 32 est fixée au boîtier 12 dans le prolongement du piston 20 et un ressort 34 est interposé entre la chemise et le piston 20 pour repousser ce dernier vers le piston pilote 24 jusque dans une position de repos dans laquelle le piston 20 est en butée contre le piston pilote 24 et ce dernier en butée contre la douille 28.

Le piston 20 comporte un passage 36 reliant les chambres d'entrée 22 et de sortie 26 et une valve à bille 38 est montée dans ce passage, la bille 38a étant située du côté de la chambre d'entrée et son siège annulaire 38b étant serti dans le passage 36 du côté de la chambre de sortie. Le piston pilote 24 comporte un doigt axial 40 qui traverse le siège 38b pour maintenir la bille 38a décollée lorsque le piston 20 occupe sa position de repos en butée contre le piston pilote 24.

Un bouchon cylindrique 42 est fixé dans la partie d'alésage 14d au-delà de la douille 28, l'intérieur du bouchon définissant une cavité 44. Une masse d'inertie 46 est montée coulissante à l'intérieur du bouchon 42 par l'intermédiaire de roulements longitudinaux 48. La cavité 44 est reliée à l'orifice d'entrée 16 par un conduit 50 ménagé dans le boîtier et à la chambre pilote 30 par un conduit 52 dans l'axe de la douille 28.

Enfin un clapet 54 commande le conduit 52 de la manière suivante : une tige cannelée 56 coulisse dans le conduit 52 et est maintenue en butée contre la masse 46 par un ressort 58. La tige 56 porte un obturateur de clapet 54a susceptible de venir en contact avec un siège de clapet 54b défini sur la douille 28 autour du conduit 52. La longueur de la tige 56 est telle que lorsque l'obturateur 54a est en contact avec le siège 54b, la tige 56 dépasse de la douille 28 à l'intérieur de la chambre pilote 30.

Le correcteur est installé sur le véhicule de sorte que l'axe de l'alésage 14 soit horizontal, le ressort 34 étant orienté vers l'avant du véhicule ; l'orifice d'entrée 16 est relié au maître-cylindre (non représenté) et l'orifice de sortie 18 est relié aux moteurs de frein arrière (non représentés).

Le fonctionnement du correcteur ne sera pas décrit ici et l'on pourra se reporter avantageusement à FR-A-2 437 962 à ce sujet.

La particularité de la présente invention consiste dans le fait que la tige 56 se prolonge en direction du piston pilote 24, et donc du piston de correcteur 20.

En effet, lorsque l'on relâche la pression de freinage, le piston de correcteur 20 est rappelé par le ressort 34 en position de repos, et le piston pilote 24 repousse la tige 56 en provoquant impérativement la réouverture du clapet 54 même dans le cas où ce dernier resterait collé sur son siège. Ainsi se trouve réalisé un dispositif mécanique interposé entre le piston de correcteur 20 et le clapet 54, maintenant le clapet 54 ouvert lorsque le piston occupe sa position de repos.

On remarquera que dans ce mode de réalisation, le déplacement de la masse 46 se fait à l'encontre du ressort 58 dont le tarage est fixe, donc pour une décélération de coupure fixe.

Par ailleurs, le piston de correcteur étant étagé, la pression à l'orifice de sortie aura, au dessus du point de coupure, un accroissement proportionnellement inférieur à celui de la pression à l'orifice d'entrée.

Dans le mode de réalisation de la figure 2, on notera les quelques différences suivantes :

l'obturateur de clapet 154a est porté par la masse 146 ;

le ressort 158 est interposé entre la masse 146 et un piston annexe 160 chargé par un ressort annexe 162 ; de la sorte, la décélération de coupure est rendue variable en fonction de la pression à l'orifice d'entrée 116 ;

le piston pilote comporte un prolongement 164 qui traverse le passage 152 et dépasse à l'intérieur de la cavité 144 pour maintenir le clapet 154 ouvert lorsque le piston 120 et le piston pilote 124 sont rappelés par le ressort 134 en position de repos ;

le piston de correcteur 120 est à diamètre unique ; ainsi cet appareil est un limiteur de pression qui limite la pression de sortie à une pression constante lorsque la pression d'entrée dépasse la pression de coupure. Dans ce cas, comme cela est représenté, le passage 136 et la valve 138 sont montés dans le piston pilote 124 et non plus dans le piston de correcteur 120, ce qui permet d'inverser la position des orifices d'entrée 116 et de sortie 118 par rapport à l'alésage 114.

## Revendications

1. Correcteur de freinage asservi à la décélération, comprenant un boîtier (12, 112) percé d'un alésage (14, 114) dans lequel débouchent un orifice d'entrée (16, 116) à relier à une source de pression et un orifice de sortie (18, 118) à relier à un moteur de frein, un piston de correcteur (20, 120) monté coulissant dans ledit alésage (14, 114) et soumis aux pressions régnant auxdits orifices ainsi qu'à une force de rappel élastique (34, 134) le rappelant vers une position de repos, une valve de correcteur (38, 138) située entre lesdits orifices et commandée par ledit piston de correcteur (20, 120), un piston pilote (24, 124) monté coulissant dans ledit alésage soumis sur l'une de ses faces à la pression régnant audit orifice de sortie et délimitant par son autre face une chambre pilote (30, 130), ledit piston pilote commandant également ladite valve de correcteur, un clapet (54, 154) monté dans un conduit (52, 152) entre ledit orifice d'entrée et ladite chambre pilote et un dispositif décélérométrique (46, 146) commandant ledit clapet, ledit piston pilote (24, 124) étant arrangé entre le dispositif décélérométrique (46, 146) et le piston de correcteur (20, 120) caractérisé en ce qu'il comprend un dispositif (56, 164), rigide au moins en direction de l'axe de l'alésage (14, 114), entre ledit piston pilote (24, 124) et ledit clapet (54, 154), ledit dispositif rigide maintenant ledit clapet en position ouverte lorsque ledit piston de correcteur occupe sa position de repos.

2. Correcteur de freinage selon la revendication 1, caractérisé en ce que ledit conduit (52, 152) est coaxial à l'alésage (14, 114) et que ledit dispositif rigide (56, 164) comprend un prolongement (56, 164) reçu dans ledit conduit (52, 152) entre ledit clapet (54, 154) et ledit piston pilote (24, 124).

3. Correcteur de freinage selon la revendication 2, caractérisé en ce que ledit prolongement (56) est solidaire dudit clapet (54a).

4. Correcteur de freinage selon la revendication 2, caractérisé en ce que ledit prolongement (164) est solidaire dudit piston pilote (124).

5. Correcteur de freinage selon l'une ou l'autre des revendications 3 et 4, caractérisé en ce que ledit dispositif décélérométrique (46, 146) comporte une masse (46, 146) montée coulissante coaxialement audit alésage (14, 114) et rappelée en éloignement dudit piston pilote (24, 124) par un ressort (58, 158), ladite masse (46, 146) étant en contact direct avec ledit clapet (54, 154).

## Claims

1. Deceleration-responsive brake regulator, comprising a casing (12, 112) provided with a bore (14, 114), an inlet opening (16, 116) to be connected to a pressure source and an outlet opening (18, 118) to be connected to a brake motor opening into said bore, a regulator piston (20, 120) slidingly mounted in said bore (14, 114) and subjected to the pressures prevailing in said openings and to a resilient return force (34, 134) biasing it towards a rest position, a regulator valve (38, 138) situated between said openings and controlled by said regulator piston (20, 120), a pilot piston (24, 124) slidingly mounted in said bore and subjected on one of its faces to the pressure prevailing in said outlet opening and delimiting by its other face a pilot chamber (30, 130), said pilot piston also controlling said regulator valve, a valve (54, 154) mounted in a conduit (52, 152) between said inlet opening and said pilot chamber, and a deceleration device (46, 146) controlling said valve, said pilot piston (24, 124) being arranged between the deceleration device (46, 146) and the regulator piston (20, 120), characterized in that it comprises a device (56, 164) between said pilot piston (24, 124) and said valve (54, 154), which device is rigid at least in the direction of the axis of the bore (14, 114), said rigid device maintaing said valve in open position when said regulator piston is in its rest position.

2. Brake regulator according to claim 1, characterized in that said conduit (52, 152) is coaxial to the bore (14, 114) and in that said rigid device (56, 164) comprises an extension (56, 164) received in said conduit (52, 152) between said valve (54, 154) and said pilot piston (24, 124).

3. Brake regulator according to claim 2, characterized in that said extension (56) is fixed to said valve (54).

4. Brake regulator according to claim 2, characterized in that said extension (164) is fixed to said pilot piston (124).

5. Brake regulator according to claim 3 or claim 4, characterized in that said deceleration device (46, 146) comprises a mass (46, 146) slidingly mounted in and coaxial to said bore (14, 114) and biased away from said pilot piston (24, 124) by a spring (58, 158), said mass (46, 146) being in direct contact with said valve (54, 154).

**Patentansprüche**

1. Verzögerungsabhängiger Bremskraftregler mit einem Gehäuse (12, 112), der mit einer Bohrung (14, 114) versehen ist, in der eine mit einer Druckquelle verbindbare Einlaßöffnung (16, 116) und eine mit einem Bremsmotor verbindbare Auslaßöffnung (18, 118) mündet, einem Regelkolben (20, 120), der in der Bohrung (14, 114) gleitend gelagert ist und dem in diesen Öffnungen herrschenden Druck sowie einer elastischen Rückholkraft (34, 134) ausgesetzt ist, die ihn in Richtung auf eine Ruhestellung vorspannt, einem Regelventil (38, 138), das zwischen diesen Öffnungen angeordnet ist und von dem Regelkolben (20, 120) gesteuert wird, einem Vorsteuerkolben (24, 124), der in dieser Bohrung gleitend gelagert ist, wobei er auf einer seiner Stirnseiten dem in der Auslaßöffnung herrschenden Druck ausgesetzt ist und mit seiner anderen Stirnseite eine Vorsteuerkammer (30, 130) begrenzt, wobei der Vorsteuerkolben in gleicher Weise das Regelventil steuert, einem Ventil (54, 154), das in einer Leitung (52, 152) zwischen der Einlaßöffnung und der Vorsteuerkammer angebracht ist, und einer Verzögerungsvorrichtung (46, 146), die dieses Ventil steuert, wobei der Vorsteuerkolben (24, 124) zwischen der Verzögerungsvorrichtung (46, 146) und dem Regelkolben (20, 120) angeordnet ist, dadurch gekennzeichnet, daß er eine zwischen dem Vorsteuerkolben (24, 124) und dem Ventil (54, 154) angeordnete Vorrichtung (56, 164) aufweist, die zumindest in Richtung der Achse der Bohrung (14, 114) starr ist, wobei die starre Vorrichtung das Ventil in seiner Offenstellung hält, wenn der Gegelkolben seine Ruhestellung einnimmt.

2. Bremskraftregler nach Anspruch 1, dadurch gekennzeichnet, daß die Leitung (52, 152) koaxial zu der Bohrung (14, 114) verläuft und daß die starre Vorrichtung (56, 164) eine Verlängerung (56, 164) aufweist, die in der Leitung (52, 152) zwischen dem Ventil (54, 154) und dem Vorsteuerkolben (24, 124) vorgesehen ist.

3. Bremskraftregler nach Anspruch 2, dadurch gekennzeichnet, daß die Verlängerung (56) mit dem Ventil (54a) fest verbunden ist.

4. Bremskraftregler nach Anspruch 2, dadurch gekennzeichnet, daß die Verlängerung (164) mit dem Vorsteuerkolben (124) fest verbunden ist.

5. Bremskraftregler nach Anspruch 3 oder 4, dadurch gekennzeichnet, daß die Verzögerungsvorrichtung (46, 146) eine Masse (46, 146) aufweist, die in der Bohrung (14, 114) koaxial gleitend gelagert ist und durch eine Feder (58, 156) von dem Vorsteuerkolben (24, 124) weggedrückt wird, wobei diese Masse (46, 146) mit dem Ventil (54, 154) direkt in Berührung steht.

FIG_1

FIG_2

0 076 751